# EUROPÄISCHE PATENTSCHRIFT

(11) **EP 0 752 327 B1**
(45) Veröffentlichungstag und Bekanntmachung des Hinweises auf die Patenterteilung: **13.05.1998**
(21) Anmeldenummer: 96109363.0
(22) Anmeldetag: 12.06.1996
(51) Int. Cl.: B60C 15/036, B60B 25/02

(54) **Fahrzeugrad mit einem ein- oder mehrteiligen Felgenkranz und darauf aufgebautem Fahrzeugluftreifen**
Vehicle wheel having a rim and a tyre built thereon
Roue pour véhicule ayant une jante en une ou plusieurs parties sur laquelle est confectionné un bandage pneumatique

(30) Priorität: 06.07.1995 DE 19524582
(43) Veröffentlichungstag der Anmeldung: 08.01.1997
(73) Patentinhaber: Continental Aktiengesellschaft, 30165 Hannover (DE)
(72) Erfinder: Huinink, Heinrich, 30823 Garbsen (DE); Baumgarten, Rainer, 29649 Wietzendorf (DE); Roik, Geert, 38162 Cremlingen (DE)

(56) Entgegenhaltungen:
- DE-A- 1 715 184
- DE-A- 2 055 172
- DE-A- 2 157 076
- US-A- 3 719 219

## Beschreibung

Die Erfindung betrifft ein Fahrzeugrad mit einem ein- oder mehrteiligen Felgenkranz und darauf aufgebautem Fahrzeugluftreifen.

Es ist bekannt, Fahrzeugräder mit einer Felge mit ein- oder mehrteiligem Felgenkranz in seinen axial äußeren Endbereichen jeweils zu einem Felgenhorn auszubilden. Auf eine solche Felge wird ein Fahrzeugluftreifen montiert. Derartige Fahrzeugluftreifen mit Laufflächenbereich und axial den Fahrzeugreifen begrenzenden vom Laufflächenbereich nach radial innen reichenden Seitenteilen sind hierzu üblicherweise im radial inneren Endbereich der Seitenteile jeweils mit einem verdickten Wulstbereich mit darin eingebettenten, über den Umfang des Reifens reichendem Wulstkern ausgebildet. Die Wulstkerne sind zugfest. Mit großem Aufwand werden die Wülste mit den Wulstkernen bei der Montage über ein mit vergleichsweise großem Durchmesser ausgebildetes Felgenhorn gehoben, so daß sich der Reifen im Betriebszustand mit den beiden Reifenwulsten von innen axial gegen die beiden Felgenhörner abstützt und er auf dem Felgenbett radial festgeklemmt ist. Die so entstehende Klemmverbindung zwischen Felge und Reifen erfordert genaue Abstimmung der Passung zwischen Reifenwulst und Felge. Nur mit großem Aufwand bei Herstellung und Montage lassen sich passungsbedingte Ungenauigkeiten reduzieren.

Der Seitenbereich des Reifens muß einerseits hinreichende Einfederung gewährleisten, andererseits muß er zur Gewährleistung der Fahreigenschaften, z. B. des Handling und des Komforts auch steif genug ausgebildet sein und die Kraftübertragung von Felge zum Laufflächenbereich sicherstellen. Um die gerade im Anbindungsbereich zwischen Felge und Wulstkern erforderliche Steifigkeit auch bei hohen Anforderungen zu gewährleisten ist es bekannt, radial oberhalb des Wulstes zusätzlich einen Apex aus besonders steifen Gummimaterial im Anschluß an den Bereich auszubilden. Der Apex reicht radial vom Kern nach außen. Alternativ hierzu ist es bekannt, das Gummimaterial im Bereich der Seitenwand besonders dick auszubilden. Beide Ansätze bedeuten jedoch zusätzliches Material, zusätzliches Gewicht und zusätzliche Gefahren hinsichtlich der Rundlaufgenauigkeit aufgrund großer rotierender Massen.

Es ist auch bekannt, Fahrzeugräder aus Felge und Reifen ohne Kernwulst herzustellen. Beispielsweise ist aus der DE-GM 1 715 184 bekannt, ein Fahrzeugrad mit einem Fahrzeugreifen mit Laufflächenbereich und zwei Seitenteilen, die in ihrem radial inneren Bereich jeweils wulstartig verdickt sind, herzustellen, wobei durch Vulkanisation die wulstartigen Verdickungen an einer Felge befestigt werden. Hierzu müßte der Reifen erst vollständig in seiner Torusform aufgebaut werden, bevor die Befestigung erfolgen könnte. Die Seitenwand ist dabei durchgehend aus fexiblem Material gestaltet, so daß sie auch im radial inneren Bereich sehr biegeweich ist und den hohen Anforderungen an Kraftübertragung zwischen Felge und Reifen unter Sicherstellung von guten Fahreigenschaften und Federungskomfort von modernen Hochgeschwindigkeitsreifen nicht standhalten kann.

Ein Fahrzeugrad gemäß dem Oberbegriff des Anspruchs 1 ist aus DE-A-2 157 076 bekannt.

Der Erfindung liegt demnach die Aufgabe zugrunde, ein Fahrzeugrad ohne Reifenwulst zu schaffen, das eine gute Einfederung des Reifens und gute Handling- und Komforteigenschaften unter Sicherstellung einer guten Kraftübertragung zwischen Reifen und Felge ermöglicht.

Erfindungsgemäß wird die Aufgabe durch die Ausgestaltung des Fahrzeugrads gemäß den Merkmalen von Anspruch 1 gelöst. Die Ausbildung der axialen Enden des Felgenkranzes in gekrümmter Verlängerung als luftundurchlässiges Seitenteil des Fahrzeugluftreifens bis hin zur Gürtellage gewährleistet die Ausbildung einer steifen Seitenwand mit sicherer Kraftübertragung auch bei hohen Geschwindigkeiten und Kurvenfahrten. Durch Ausbildung der Felge zumindest in einem radialen Teilbereich im oberen Seitenwandbereich zwischen Gürtellagenende und halber Reifenhöhe wird hinreichende Flexibilität der Seitenwand im für die Einfederbarkeit, Handling und Komfort wesentlichen Bereich unmittelbar im Anschluß an die Gürtelkante gewährleistet. Das Laufstreifenpaket mit Gürtel kann direkt auf die Felge aufgelegt werden. Hierdurch können Bauteile reduziert werden. Aufgrund der reduzierten Teile wird eine präzisere Fertigung ermöglicht, wodurch der Rundlauf verbessert wird. Die Runderneuerungsfähigkeit wird durch einfaches Abtrennen des Laufstreifens mit Gürtel vom Reifen verbessert.

Die Merkmale von Anspruch 2 stellen eine besonders vorteilhafte Ausbildung des Felgenkranzes dar. Die Faserverstärkung gibt hinreichend Steifigkeit in Abhängigkeit von der Faserdichte und ermöglicht andererseits in einfacher Weise die Ausbildung weniger steifer, flexiblerer Bereiche durch Reduzierung der Faserdichte in diesen Bereichen. Somit kann im zur Flexibilität besonders wichtigen Bereich im Anschluß an die Reifenschulter hinreichend Flexibilität gewährleistet werden.

Bevorzugt ist die Ausbildung des Felgenkranzes mit im Bereich der gekrümmten Verlängerung stetig abnehmender Steifigkeit, so daß fließende Übergänge zwischen steiferen und flexibleren Bereichen gewährleistet sind. Belastungsspitzen aufgrund von sprunghaften Steifigkeitveränderungen werden ausgeschlossen.

Bevorzugt werden die Steifigkeitsunterschiede durch Verjüngung des Querschnitts der gekrümmten Verlängerung des Felgenkranzes erzielt. Die Biegesteifigkeit nimmt bei stetiger Verjüngung zusehens ab, so daß im radial inneren Bereich die Seite des Reifens sehr steif und im radial äußeren Bereich in axialer Richtung hinreichend flexibel ausgebildet ist.

Durch Beschichtung der Verlängerung des Felgenkranzes mit Kautschuk im Bereich ihrer Ausbildung als Seitenwand wird die Anbindung an die Kautschukschicht des Laufflächenbereichs bei der Vulkanisation verbessert und die Seitenwand in einfacher Weise luftdicht gestaltet.

Eine einstückige Ausbildung des Felgenkranzes ermöglicht die Reduzierung der Zahl von Bauteilen, von Montagefehlern, die zu Rundlauf- bzw. Dichtigkeitsproblemen führen könnten, sowie den Verzicht zusätzlicher Abdichtungen gegen Druckluftverlust. In einer bevorzugten Ausführungsform wird der Felgenkranz aus einem flexiblen einheitlichen Material hergestellt. Durch Ausbildung mit über den Umfang des Reifens verteilten, schlitzförmigen Ausnehmungen im radial äußeren Bereich der Verlängerung wird in diesem radial äußeren Bereich die Biegesteifigkeit der gekrümmten Verlängerung herabgesetzt, so daß der ansonsten steife Felgenkranz in diesem Bereich hinreichend Flexibilität zur Einfederung gewährleistet.

Durch Ausbildung des einstückigen Felgenkranzes aus chemisch miteinander verbundenen unterschiedlichen Materialien kann im radial inneren Bereich die zur Kraftübertragung erforderliche Biegesteifigkeit durch geeignetes steifes Material und im radial äußeren Bereich die dort gewünschte Seitenflexibilität durch geeignetes weniger steifes, flexibleres Material sichergestellt werden.

Die festigkeitsgebende Wirkung der Felge bis unter den Gürtelrand ermöglicht den Verzicht einer zusätzlichen Karkassenlage, zumindest im Bereich der Seitenwände, und bei geeigneter Steifigkeit auch im Bereich des Gürtels. Hierdurch kann die Trennung von Gürtel und Laufstreifen vom Rest des Reifens und somit die Runderneuerungsmöglichkeit verbessert werden.

Entsprechend den an ein derartiges Fahrzeugrad gestellten während des Betriebs zu erfüllenden Anforderungen und der gewählten Ausbildung der Verlängerung der Felge kann zusätzlich eine Karkasse, die sich auch über die Seitenwandbereiche erstreckt, ausgebildet werden.

Die Erfindung wird im folgenden anhand der in den Figuren 1 bis 5 dargestellten Ausführungsform näher erläutert. Hierin zeigen
- Fig. 1: erfindungsgemäßes Fahrzeugrad mit im Bereich der radialen Verlängerung in seinem Querschnitt verjüngt ausgebildeten Felgenkranz
- Fig. 2: schematische Querschnittsdarstellung mit Felgenkranz aus zwei Materialien
- Fig. 3: schematische Darstellung einer erfindungsgemäßen Ausführung mit mehrteilig ausgebildeter Felge
- Fig. 4: erfindungsgemäßes Fahrzeugrad in perspektivischer Schichtendarstellung mit Einschlitzungen der radialen Verlängerung des Felgenkranzes mit einer Ausbildung aus Fasermatrix
- Fig. 5: erfindungsgemäße Ausführung mit einer Ausbildung aus Fasermatrix.

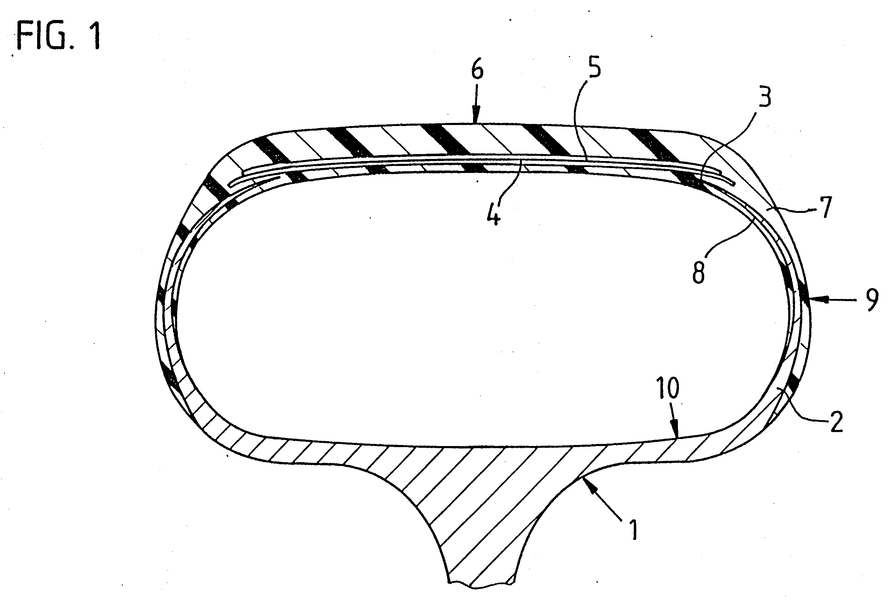

Fig. 1 zeigt einen Querschnitt durch ein Fahrzeugrad mit Felge 1, Seitenwänden 9 und im Kronenbereich der Lauffläche von Schulter zu Schulter reichenden über den Umfang des Reifens erstreckt ausgebildeten Gürtellagen 4 und 5, auf die ein Laufstreifen 6 aufgelegt ist. Der Felgenkranz 10 der Felge 1 ist in ihren axial äußeren Enden jeweils mit radial nach außen gekrümmten Verlängerungen 2 ausgebildet, die sich mit ihren Endbereichen 3 bis unter die axialen Endbereiche der unteren Gürtellage 4 im Schulterbereich des Reifens erstrecken. Im Bereich der Seitenwände 9 sind die radialen Verlängerungen 2 des Felgenkranzes 10 mit Seitenwandgummi 7 und 8 beschichtet.

Der Felgenkranz ist aus einem flexiblen einheitlichen Material, beispielsweise aus einer flexiblen Aluminium- oder Magnesiumlegierung oder aus einem flexiblen Kunststoff ausgebildet. Es ist auch denkbar, ihn aus anderen hochflexiblen Metallen auszubilden.

Die Verlängerung 2 gibt dem Reifen im Bereich der Seitenwände die für den Einsatz im Straßenverkehr erforderliche Festigkeit. Die stetige Verjüngung des Querschnitts gibt dem Reifen hinreichend Elastizität im radial äußeren Seitenwandbereich zur Eindämpfung der auf den Reifen einwirkenden Belastungen und Schwingungen. Aufgrund der stützenden Wirkung der bis unter den Gürtel reichenden Endbereiche 3 der Verjüngung sind weitere Karkassschichten nicht erforderlich.

Es ist jedoch denkbar, für spezielle Einsatzfälle, in denen eine zusätzliche Festigkeit insbesondere im Kronenbereich gewünscht wird, zumindest im Kronenbereich zusätzliche Karkaßschichten auszubilden.

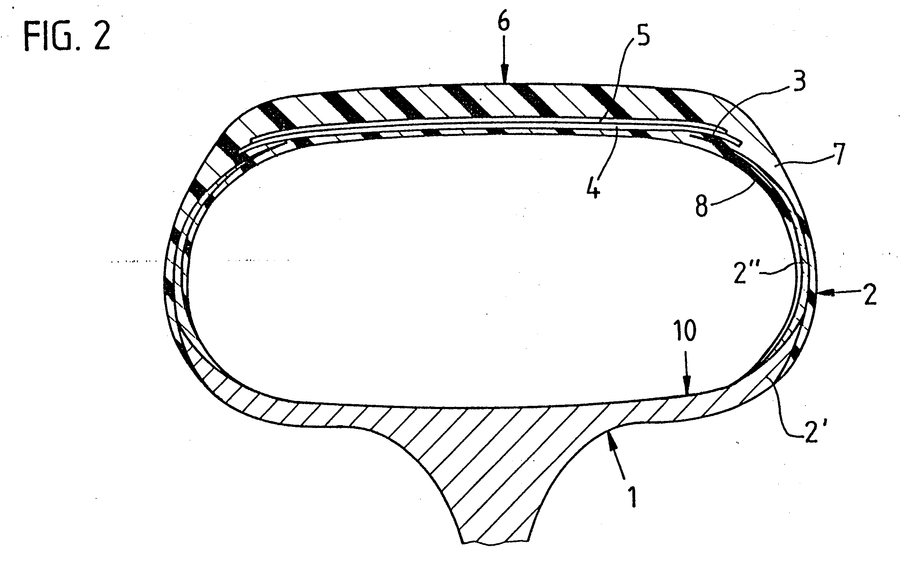

Wie in Figur 2 dargestellt ist, ist es denkbar, den Felgenkranz 10 im radial inneren Bereich 2' aus einem Material geringerer Flexibilität, beispielsweise aus Stahl, auszubilden und den radial äußeren Bereich 2' aus einem flexibleren Material, beispielsweise aus einer flexiblen Aluminiumlegierung, oder aus einem flexiblen Kunststoff auszubilden, wobei die beiden Materialien durch bekannten Verbund für Metall-Kunststoffverbindungen chemisch miteinander verbunden sind. Beispielsweise ist dies durch Polyphenylenether haftvermittlerfrei möglich.

In einer solchen Ausführung ist es denkbar, die radiale Verlängerung 2 ohne Verjüngung bis in den radialen Endbereich 3 auszubilden. Die zur Sicherung hinreichender Flexibilität und abnehmender Steifigkeit für die Einfederbarkeit wird im radial äußeren Bereich durch das flexibler ausgebildete Material erreicht.

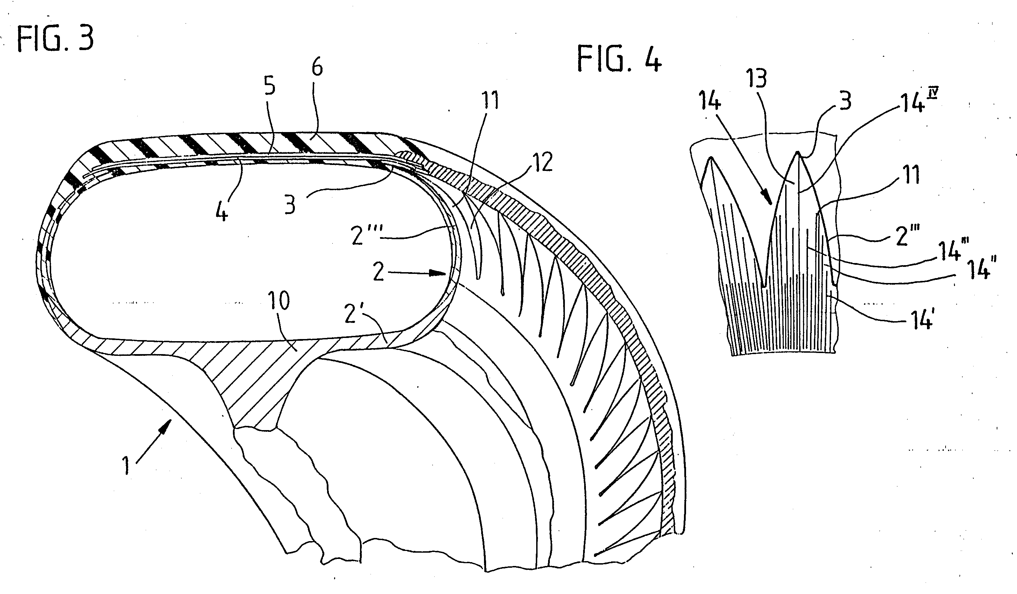

Wie in Figur 3 dargestellt ist, ist es auch denkbar, den Felgenkranz 10 in seiner radialen Verlängerung 2 im Anschluß an einen Verlängerungsbereich 2' mit einem Verlängerungsbereich 2''' mit dem radialen Endbereich 3 auszubilden, bei dem in Umfangsrichtung des Reifens verteilt kerbenartige Einschnitte ausgebildet sind, die sich vom Endbereich 3 nach radial innen hin verjüngen. Auf diese Weise ist der radial äußere Bereich 2''' der Verlängerung 2 zu zahnförmigen benachbarten Laschen 11 ausgebildet, die sich nach radial außen hin verjüngen. Ein jeder Zahn 11 wird von zwei Einschnitten 12 begrenzt. Die axiale Draufsicht ist in Figur 4 dargestellt. Die Seitenwand-Gummilagen 7 und 8 reichen zumindest über den gesamten äußeren Verlängerungsbereich 2'''

Der Felgenkranz 10 ist aus Stahl, Aluminiumlegierung, Magnesiumlegierung oder aus einem flexiblen Kunststoff hergestellt. Die Einschnitte in Verbindung mit der zahnförmigen radial nach außen gerichteten Verjüngung der Zähne bewirken radial nach außen reduzierte Steifigkeit der einzelnen Zähne und hinreichend Flexibilität bereits bei Verwendung von Stahl im Verlängerungsbereich 2'''. Durch Einsatz eines hochflexiblen Materials wird die Dämpfung zusätzlich verbessert.

Es ist auch denkbar, im Ausführungsbeispiel von Figur 3, den Felgenkranz 10 im radial inneren Bereich 2' aus einem Material mit geringerer Flexibilität und den radial äußeren Bereich mit einem Material höherer Flexibilität auszubilden, wobei die Materialien chemisch miteinander verbunden sind.

Ebenso wie in den Ausführungsbeispielen von Figur 1 und Figur 2 ist eine zusätzliche Querschnittsverjüngung im Bereich 2''', wie in Figur 3 auch dargestellt, zur zusätzlichen Verbesserung der Einfederbarkeit denkbar.

In einer weiteren Ausführung ist es auch denkbar, den Felgenkranz 10 in einem radial äußeren Bereich 2'', wie in Figur 2 dargestellt ist, oder in einem äußeren Bereich 2''', wie in Figur 3 dargestellt ist, aus einer durch Fasern verstärkten Matrix mit im wesentlichen radial nach außen gerichteten Fasern auszubilden, wobei die Faserdichte nach radial außen hin abnimmt. Aufgrund der abnehmenden Faserdichte nimmt die Festigkeit im radial äußeren Bereich ab und die Seitenwand wird im radial äußeren Bereich aufgrund der flexiblen Matrix flexibler als im radial inneren Bereich. Beispielsweise ist es denkbar, eine Aluminiumlegierung oder ein thermoplastisches Elastomer mit Kunststoff-Fasern oder Glasfasern zu verstärken.

Wie in Figur 4 am Beispiel der mit Einschnitten versehenen äußeren Verjüngung 2''' von Figur 3 dargestellt ist, ist es auch denkbar, die Länge der radialen Erstreckung der einzelnen Fasern 14 in der Matrix 13 unterschiedlich auszubilden. Im Beispiel von Figur 4 sind zum besseren Verständnis vereinfacht Fasern mit vier verschiedenen Längen 14', 14'', 14''',14^{IV} dargestellt. Aufgrund der unterschiedlichen radialen Erstreckung ergibt sich, daß im radial äußeren Bereich der Enden 3 die Faserdichte sehr gering und im radial inneren Bereich im Übergang zum radial inneren Verlängerungsbereich 2' sehr groß ist.

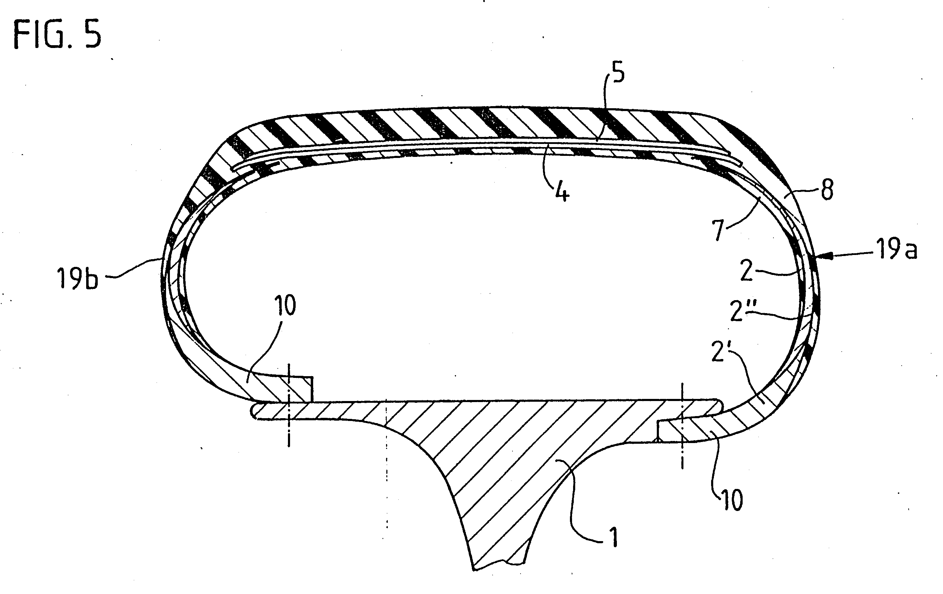

Es ist denkbar, den Felgenkranz 10, wie in den Figuren 1 bis 4 dargestellt ist, einstückig mit der Felge 1 auszubilden. Ebenso ist es denkbar, die Felgen mehrteilig aus einem Felgenkörper 1 und Felgenkränze 10 aufzubauen, wobei die Felgenkränze 10 konzentrisch auf den Felgenkörper 1, beispielsweise durch Verschraubung, befestigt werden. Dabei ist es denkbar, beide Felgenkränze 10 radial außen auf dem Felgenkörper 1 zu befestigen, oder, wie in Figur 5 dargestellt ist, den Felgenträger 10 mit der linken Seitenwand 19 b radial außerhalb und den rechten Felgenträger 10 mit der rechten Seitenwand 19 a radial innerhalb der Felge 1 zu befestigen. Im Ausführungsbeispiel von Figur 5 ist dabei die rechte Seitenwand 19 a in ihrer radialen Erstreckung größer ausgebildet als die linke 19 b. Im Ausführungsbeispiel von Figur 5 ist der Reifen von rechts nach links über die Felge 1 zur Montage geschoben. Die rechte Seite wird durch Anschlag des Felgenkranzes 10 am axialen Zentrieransatz des Felgenkörpers 1 zentriert. Die Zentrierung der linken Seite erfolgt beispielsweise mit Hilfe von Paßstiften.

### Bezugszeichenliste

- 1.: Felge
- 2.: radiale Verlängerung
- 3.: radialer Endbereich
- 4.: Gürtellage
- 5.: Gürtellage
- 6.: Laufstreifen
- 7.: Gummilage
- 8.: Gummilage
- 9.: Seitenteil
- 10.: Felgenkranz
- 11.: Zahn
- 12.: Einschnitt
- 13.: Fasermatrix
- 14.: Fasern
- 19a: rechte Seitenwand
- 19b: linke Seitenwand

## Patentansprüche

1. Fahrzeugrad mit einem ein- oder mehrteiligen Felgenkranz (10) und darauf aufgebautem Fahrzeugluftreifen, bei dem die axialen Enden des Felgenkranzes (10) jeweils in einer radialen Verlängerung (2) nach oben gekrümmt als luftundurchlässige Seitenteile des Fahrzeugluftreifens ausgebildet sind, wobei radial außerhalb einer Gürtellage (4, 5) ein Laufstreifen (6) aufgelegt ist, dadurch gekennzeichnet, daß der radiale Endbereich (3) der Verlängerungen (2) jeweils nach axial innen gekrümmt bis in die Reifenschulter hineinreichend ausgebildet ist und radial außerhalb der radialen Endbereiche (3) der beiden die Seitenteile bildenden Verlängerungen (2), die zumindest eine Gürtellage (4, 5) im Bereich unterhalb der Lauffläche jeweils unter Überlappung von dem einen zum anderen radialen Endbereich (3) axial erstreckend ausgebildet ist, und daß zumindest in einem radialen Bereich der Verlängerung (2) zwischen Gürtellagenende und halber Reifenhöhe zumindest ein Teilbereich der Verlängerung (2) mit geringerer Steifigkeit ausgebildet ist als im Bereich radial innerhalb der halben Reifenhöhe.

2. Fahrzeugrad gemäß den Merkmalen von Anspruch 1, wobei der Felgenkranz (10) aus einem faserverstärkten Werkstoff, vorzugsweise aus einer faserverstärkten Aluminiumlegierung oder Polymermischung gebildet ist und die Faserdichte des Felgenkranzes (10) zumindest in radialen Teilbereichen zwischen Bereich der Überlappung und halber Reifenhöhe geringer als im Bereich radial innerhalb der halben Reifenhöhe ist.

3. Fahrzeugrad gemäß den Merkmalen von Anspruch 1 oder 2,
wobei die gekrümmten Verlängerungen (2) vom Beginn ihrer Krümmung nach radial außen bis zumindest zum Überlappungsbereich mit der Gürtellage (4, 5) mit im wesentlichen stetig abnehmender Steifigkeit ausgebildet sind.

4. Fahrzeugrad gemäß den Merkmalen von Anspruch 1, 2 oder 3,
wobei die gekrümmten Verlängerungen (2) zwischen Beginn der Krümmung nach radial außen und zumindest dem Beginn der Überlappung zwischen Verlängerung (2) und Gürtellage (4, 5) in ihrem Querschnitt im wesentlichen stetig verjüngt ausgebildet sind.

5. Fahrzeugrad gemäß den Merkmalen von einem oder mehreren der Ansprüche 1 bis 4, dadurch gekennzeichnet,
daß die Verlängerungen (2) im Bereich ihrer Ausbildung als Seitenwand von innen und/oder außerhalb mit einer Kautschukschicht (7, 8) beschichtet sind.

6. Fahrzeugrad gemäß den Merkmalen von einem oder mehreren der Ansprüche 1 bis 5, dadurch gekennzeichnet,
daß der Felgenkranz (10) einstückig ausgebildet ist.

7. Fahrzeugrad gemäß den Merkmalen von einem oder mehreren der Ansprüche 1, 3, 4, 5 oder 6, dadurch gekennzeichnet,
daß der Felgenkranz (10) aus einem flexiblen einheitlichen Material, vorzugsweise aus einer Aluminiumlegierung, einem anderen hochflexiblen Metall oder aus einem flexiblen Kunststoff, ausgebildet ist.

8. Fahrzeugrad gemäß den Merkmalen von Anspruch 1,
bei dem im radial äußeren Bereich der Verlängerung (2) über den Umfang des Reifens verteilt radial nach innen reichende schlitzförmige Ausnehmungen (12) ausgebildet sind, und die Verlängerung (2) von innen und/oder außen mit einem luftdichten flexiblen Material, vorzugsweise Kautschuk, beschichtet ist, wobei die Beschichtung auch die Schlitze abdichtet.

9. Fahrzeugrad gemäß den Merkmalen von Anspruch 8,
wobei der Felgenkranz (10) aus einem hochflexiblen Metall, vorzugsweise aus einer Aluminiumlegierung, hergestellt ist.

10. Fahrzeugrad gemäß den Merkmalen von Anspruch 6,
wobei der einstückige Felgenkranz (10) aus chemisch miteinander verbundenen unterschiedlichen Materialien ausgebildet ist,
wobei zumindest im radial äußeren Endbereich (3) ein Material mit höherer Flexibilität ausgebildet ist als im radial inneren Bereich der Verlängerung (2).

11. Fahrzeugrad gemäß den Merkmalen von Anspruch 10,
wobei der Felgenkranz (10) im wesentlichen aus Metall ausgebildet ist und zumindest im radial äußeren Bereich der gekrümmten Verlängerung (2) die Verlängerung (2) aus flexiblem Kunststoff ausgebildet ist.

12. Fahrzeugrad gemäß den Merkmalen von einem oder mehreren der Ansprüche 1 bis 11,
wobei unterhalb des Gürtels (4, 5) zusätzlich zumindest eine Karkassenlage ausgebildet ist, die sich radial innerhalb der Verlängerungen (2) im wesentlichen auch über die gekrümmten Bereiche der Verlängerung (2) erstreckt.

13. Fahrzeugrad gemäß den Merkmalen von einem oder mehreren der Ansprüche 1 bis 11,
wobei der Fahrzeugreifen ohne Karkassenschichten ausgebildet ist.

## Claims

1. Vehicle wheel, having a one-piece or multi-piece rim (10) and a pneumatic vehicle tyre fitted thereon, wherein the axial ends of the rim (10) are each curved upwardly in a radial extension (2) and configured as air-impermeable lateral portions of the pneumatic vehicle tyre, a tread strip (6) being applied radially externally of a belt ply (4, 5), characterised in that the radial end region (3) of each of the extensions (2) is configured to extend into the tyre shoulder in an axially inwardly curved manner, and, radially externally of the radial end regions (3) of the two extensions (2) forming the lateral portions, at least one belt ply (4, 5) is provided in the region beneath the tread surface so as to extend axially with an overlap from one radial end region (3) to the other, and in that at least one partial region of the extension (2) is provided with less rigidity, in at least one radial region of the extension (2) between the belt ply end and half the tyre height, than in the region radially internally of half the tyre height.

2. Vehicle wheel according to the features of claim 1, wherein the rim (10) is formed from a fibre-reinforced material, preferably from a fibre-reinforced aluminium alloy or polymer mixture, and the fibre density of the rim (10), at least in radial partial regions between the region of the overlap and half the tyre height, is less than in the region radially internally of half the tyre height.

3. Vehicle wheel according to the features of claim 1 or 2, wherein the curved extensions (2) are provided with a substantially constantly decreasing rigidity from the beginning of their curvature radially outwardly to at least the overlapping region with the belt ply (4, 5).

4. Vehicle wheel according to the features of claim 1, 2 or 3, wherein the curved extensions (2) have a substantially constantly tapering configuration in respect of their cross-section between the beginning of the curvature radially outwardly and at least the beginning of the overlap between extension (2) and belt ply (4, 5).

5. Vehicle wheel according to the features of one or more of claims 1 to 4, characterised in that the extensions (2) are coated with a rubber layer (7, 8) internally and/or externally in the region of their configuration as a lateral wall.

6. Vehicle wheel according to the features of one or more of claims 1 to 5, characterised in that the rim (10) is a one-piece construction.

7. Vehicle wheel according to the features of one or more of claims 1, 3, 4, 5 or 6, characterised in that the rim (10) is formed from a flexible, uniform material, preferably from an aluminium alloy, from another highly flexible metal or from a flexible plastics material.

8. Vehicle wheel according to the features of claim 1, wherein, in the radially outer region of the extension (2), radially inwardly extending slot-like recesses (12) are distributed over the circumference of the tyre, and the extension (2) is coated, internally and/or externally, with a flexible airtight material, preferably rubber, the coating also sealing the slots.

9. Vehicle wheel according to the features of claim 8, wherein the rim (10) is produced from a highly flexible metal, preferably from an aluminium alloy.

10. Vehicle wheel according to the features of claim 6, wherein the one-piece rim (10) is formed from various materials which are chemically bonded together, a material with a greater flexibility being provided at least in the radially outer end region (3) than in the radially inner region of the extension (2).

11. Vehicle wheel according to the features of claim 10, wherein the rim (10) is formed substantially from metal, and the extension (2), at least in the radially outer region of the curved extension (2), is formed from flexible plastics material.

12. Vehicle wheel according to the features of one or more of claims 1 to 11, wherein at least one carcase ply is additionally provided below the belt (4, 5), which ply extends radially internally of the extensions (2) substantially also over the curved regions of the extension (2).

13. Vehicle wheel according to the features of one or more of claims 1 to 11, wherein the vehicle tyre is constructed without carcase layers.

## Revendications

1. Roue de véhicule comprenant un cercle de jante (10) en une ou plusieurs parties et un bandage pneumatique de véhicule confectionné sur ce cercle, dans laquelle les extrémités axiales du cercle de jante (10) sont réalisées comme des prolongements radiaux (2) incurvés vers le haut et formant des parties latérales imperméables à l'air du pneumatique, avec disposition, radialement à l'extérieur d'un pli de ceinture (4, 5), d'une bande de roulement (6) par-dessus ce pli, caractérisée en ce que la zone d'extrémité radiale (3) de chacun des prolongements (2) est incurvée axialement vers l'intérieur jusque dans l'épaulement du pneumatique et, radialement à l'extérieur des zones d'extrémité radiale (3) des deux prolongements (2) formant les parties latérales, au moins un pli de ceinture (4, 5) est formé pour s'étendre axialement, dans la zone située au-dessous de la surface de roulement, d'une zone d'extrémité radiale (3) à l'autre, à recouvrement par rapport à chacune d'elles, et que, au moins dans une zone radiale du prolongement (2) située entre l'extrémité du ou des pli(s) de ceinture et la mihauteur du pneumatique, au moins une zone partielle du prolongement (2) est réalisée avec une plus faible raideur que la zone située radialement à l'intérieur de la mi-hauteur du pneumatique.

2. Roue de véhicule selon les caractéristiques de la revendication 1, dans laquelle le cercle de jante (10) est formé d'un matériau renforcé par des fibres, de préférence d'un alliage d'aluminium ou d'un mélange de polymères renforcé par des fibres, et la densité des fibres du cercle de jante (10) est plus faible, au moins dans des zones radiales partielles situées entre la zone du recouvrement et la mi-hauteur du pneumatique, que dans la zone située radialement à l'intérieur de la mi-hauteur du pneumatique.

3. Roue de véhicule selon les caractéristiques de la revendication 1 ou 2, dans laquelle les prolongements courbes (2) sont réalisés, à partir du début de leur courbure radialement vers l'extérieur jusqu'à au moins la zone de recouvrement avec le pli de ceinture (4, 5), avec une raideur qui décroît essentiellement de façon progressive.

4. Roue de véhicule selon les caractéristiques de la revendication 1, 2 ou 3, dans laquelle les prolongements courbes (2) sont réalisés, entre le début de la courbure en direction radialement vers l'extérieur et au moins jusqu'au début du recouvrement entre le prolongement (2) et le pli de ceinture (4, 5), de manière que leur section droite s'amincisse essentiellement de façon progressive.

5. Roue de véhicule selon les caractéristiques d'une ou plusieurs des revendications 1 à 4, caractérisée en ce que les prolongements (2) sont revêtus intérieurement et/ou extérieurement d'une couche de caoutchouc (7, 8) dans la zone où ils sont réalisés comme flanc.

6. Roue de véhicule selon les caractéristiques d'une ou plusieurs des revendications 1 à 5, caractérisée en ce que le cercle de jante (10) est réalisé d'un seul tenant.

7. Roue de véhicule selon les caractéristiques d'une ou plusieurs des revendications 1, 3, 4, 5 ou 6, caractérisée en ce que le cercle de jante (10) est réalisé d'un même matériau flexible, de préférence d'un alliage d'aluminium, d'un autre métal hautement flexible ou d'une matière plastique flexible.

8. Roue de véhicule selon les caractéristiques de la revendication 1, dans laquelle des évidements (12) en forme de fentes, répartis sur le pourtour du pneumatique et s'étendant radialement vers l'intérieur, sont formés dans la zone radialement extérieure du prolongement (2), et le prolongement (2) est revêtu intérieurement et/ou extérieurement d'un matériau flexible étanche à l'air, de préférence de caoutchouc, le revêtement étanchant également les fentes.

9. Roue de véhicule selon les caractéristiques de la revendication 8, dans laquelle le cercle de jante (10) est fabriqué d'un métal hautement flexible, de préférence d'un alliage d'aluminium.

10. Roue de véhicule selon les caractéristiques de la revendication 6, dans laquelle le cercle de jante (10) d'un seul tenant est fabriqué de matériaux différents liés chimiquement entre eux, au moins la zone d'extrémité radialement extérieure (3) étant faite d'un matériau de plus grande flexibilité que la zone radialement intérieure du prolongement (2).

11. Roue de véhicule selon les caractéristiques de la revendication 10, dans laquelle le cercle de jante (10) est fabriqué essentiellement de métal et au moins la zone radialement extérieure du prolongement courbe (2) est fait d'une matière plastique flexible.

12. Roue de véhicule selon les caractéristiques d'une ou plusieurs des revendications 1 à 11, dans laquelle au moins un pli de carcasse est formé en plus au-dessous de la ceinture (4, 5), pli qui s'étend radialement à l'intérieur des prolongements (2), pour l'essentiel aussi sur les zones courbes du prolongement (2).

13. Roue de véhicule selon les caractéristiques d'une ou plusieurs des revendications 1 à 11, dans laquelle le pneumatique de véhicule est réalisé sans couches de carcasse.
